# EUROPEAN PATENT SPECIFICATION

(11) **EP 2 559 918 B1**
(45) Date of publication and mention of the grant of the patent: **22.01.2014**
(21) Application number: 12158071.6
(22) Date of filing: 05.03.2012
(51) Int. Cl.: F16H 59/02

(54) **Shifter assembly for a vehicle**
Schaltanordnung für ein Fahrzeug
Ensemble formant levier de vitesse pour véhicule

(43) Date of publication of application: 20.02.2013
(73) Proprietor: Kongsberg Automotive AB, 56528 Mullsjö (SE)
(72) Inventor: Bui, Cuong, 55318 Mullsjö (SE)
(74) Representative: UEXKÜLL & STOLBERG

(56) References cited:
- EP-A1- 2 194 436
- DE-A1- 10 159 642
- DE-B3-102004 053 576
- JP-A- 9 006 452
- JP-A- 2009 280 052
- US-A- 808 219

## Description

### BACKGROUND OF THE INVENTION

### 1. Field of the Invention

The present invention relates to a shifter assembly for a vehicle and a method of mounting a handle to a lever in the shifter assembly.

### 2. Description of the Related Art

Various shifter knobs are known in the art for a vehicle. Many different techniques can be used to assembly a shifter knob. One solution in the industry is disclosed in European Patent No. 2 194 436 to Autoliv Development AB (the '436 patent). Specifically, the '436 patent discloses an operation lever device for a gearshift control. The operation lever device includes a lever shaft and a knob fixed to the lever shaft. The knob allows a user to manually displace the lever shaft. The knob includes a flange element defining a central through-hole forming an insertion opening for the lever shaft. A ring element is permanently coupled to the knob at an outer edge of the flange element. A collar is fixed to the lever shaft and the ring element is rotatable to allow the lever shaft and the collar to be inserted through the ring element. Once the lever shaft and the collar are inserted through the ring element, the ring element is rotated to secure the knob to the lever shaft. However, play or lash can be found between the ring element and the lever shaft.

JP 09006452 A discloses
a shifter assembly for a vehicle, said assembly comprising:
   a lever defining a longitudinal axis;
   a handle having a grip portion and a collar portion extending from said grip portion to a distal end with said collar portion defining a cavity along said longitudinal axis for receiving said lever to couple said handle to said lever;
   a sleeve disposed about said lever and coupled to said collar portion to receive said distal end of said collar portion with said sleeve including a first end facing said grip portion and a second end spaced from said first end along said longitudinal axis and said sleeve being moveable along said longitudinal axis between a locked position and an unlocked position.

Therefore, there remains an opportunity to develop a shifter assembly that prevents play or lash and is easy to assemble/disassemble.

### SUMMARY OF THE INVENTION

The present invention provides for a shifter assembly for a vehicle. The shifter assembly includes a lever defining a longitudinal axis. The shifter assembly further includes a handle having a grip portion and a collar portion extending from the grip portion to a distal end. The collar portion defines a cavity along the longitudinal axis for receiving the lever to couple the handle to the lever. The shifter assembly also includes a sleeve disposed about the lever and coupled to the collar portion to receive the distal end of the collar portion. The sleeve includes a first end facing the grip portion and a second end spaced from the first end along the longitudinal axis. The sleeve is rotatable about the longitudinal axis between a locked position and an unlocked position and the sleeve is moveable along the longitudinal axis during rotation of the sleeve between the locked and unlocked positions. The shifter assembly further includes a flange coupled to the second end of the sleeve and cooperating with the distal end of the collar portion such that the flange is wedged between the lever and the distal end of the collar portion when the sleeve is in the locked position for preventing lash between the handle and the lever.

A method of mounting a handle to a lever in such a shifter assembly includes the steps of disposing the sleeve about the lever, mounting the collar portion of the handle to the lever, and moving the sleeve to at least partially surround the distal end of the collar portion. The method further includes the steps of rotating the sleeve from an unlocked position to a locked position and wedging the flange of the sleeve between the lever and the distal end of the collar portion when the sleeve is in the locked position to prevent lash between the handle and the lever.

Therefore, the shifter assembly of the present invention is designed to prevent play or lash between the handle and the lever. For example, play or lash can be prevented between the handle and the lever transverse to the longitudinal axis. In addition, the shifter assembly provides easy assembly and disassembly of the handle for servicing purposes.

### BRIEF DESCRIPTION OF THE DRAWINGS

Advantages of the present invention will be readily appreciated, as the same becomes better understood by reference to the following detailed description, when considered in connection with the accompanying drawings.
Figure 1 is a perspective view of a shifter assembly.
Figure 2 is a plan view of the shifter assembly.
Figure 3 is a cross-sectional view of a handle and a lever taken from lines 3-3 of Figure 2.
Figure 4 is an exploded view of the shifter assembly.
Figure 5 is a cross-sectional view of the handle and a sleeve coupled to the handle in an unlocked position with the handle and the sleeve being coupled to the lever.
Figure 6 is a cross-sectional view of a plurality of tabs of the handle disposed in respective notches of the lever with the sleeve in the unlocked position.
Figure 7 is a cross-sectional view of the tabs of the handle disposed in respective notches of the lever with the sleeve in a locked position.
Figure 8 is an end view of the sleeve.
Figure 9 is a plan view of the handle and the sleeve in an unlocked position with a protrusion of a first outer diameter disposed in a slot and the protrusion spaced from a second ramp with the protrusion, the slot, and the second ramp shown in phantom lines.
Figure 10 is a plan view of the sleeve in the unlocked position and another protrusion of a second outer diameter disposed in another slot and spaced from another second ramp with the protrusion, the slot, and the second ramp shown in phantom lines.
Figure 11 is a plan view of the sleeve in the locked position and the protrusion of Figure 9 engaging the second ramp of Figure 9 as shown in phantom lines.
Figure 12 is a bottom view of the sleeve in the locked position with a protrusion adjacent a second ramp.
Figure 13 is a broken plan view of a collar portion of the handle.
Figure 14 is a perspective view of a portion of the lever having a finished surface.
Figure 15 is a perspective cross-sectional view of a portion of the handle having a finished surface.
Figure 16 is a perspective cross-sectional view of a portion of a flange having a finished surface.

### DETAILED DESCRIPTION OF THE INVENTION

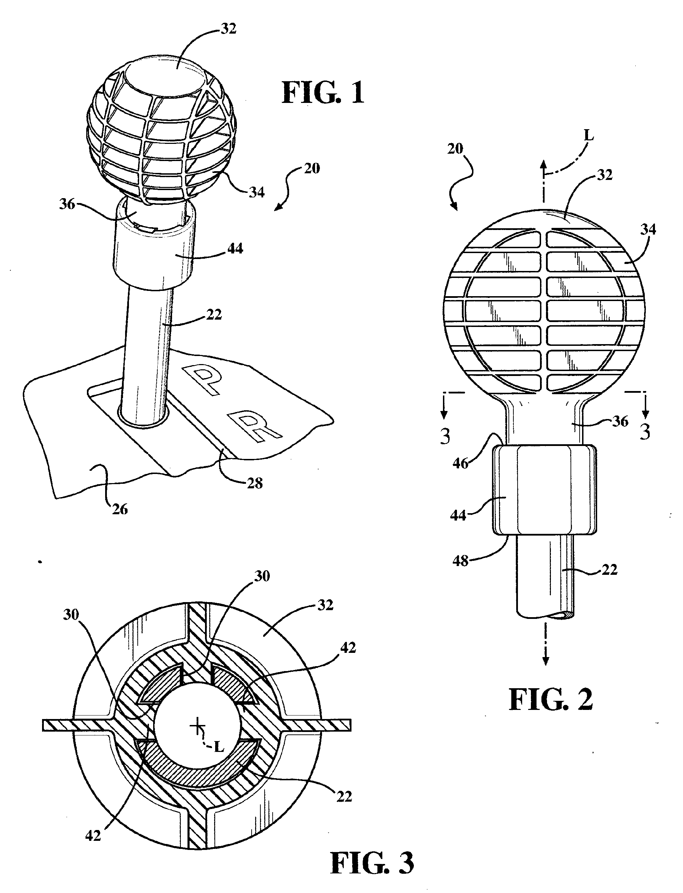

Referring to the Figures, wherein like numerals indicate like or corresponding parts throughout the several views, a shifter assembly 20 for a vehicle (not shown) is generally shown in Figures 1, 2 and 4. It is to be appreciated that the shifter assembly 20 can be utilized with non-vehicles.

The shifter assembly 20 includes a lever 22 defining a longitudinal axis L. The lever 22 includes a top end 24 and a bottom end (not shown) spaced from each other along the longitudinal axis L. Generally, a user moves the lever 22 to a desired position. For example, in one embodiment, as shown in Figure 1, the lever 22 is movably coupled to a housing 26 defining a gate 28 to select or change one of a plurality of gears of a transmission of the vehicle. As such, it is to be appreciated that the lever 22 can be utilized with an automatic transmission or a manual transmission.

The lever 22 is disposed through the gate 28 with the bottom end of the lever 22 movably coupled to the housing 26 and the top end 24 exposed for the user to move. Therefore, when moving the lever 22 to the desired position in the gate 28, the lever 22 cooperates with the transmission to select or change one of the gears. It is to be appreciated that the gears can be defined as one or more of the following positions: park, reverse, neutral, drive, low, high, overdrive, first gear, second gear, third gear, fourth gear, and/or any other suitable position(s). It is to also be appreciated that the lever 22 can be utilized in systems other than transmissions.

Turning to Figures 2-4, generally, the lever 22 defines a groove 30, and more specifically, the top end 24 of the lever 22 defines the groove 30. In certain embodiments, the groove 30 is further defined as a plurality of grooves 30 spaced from each other radially about the longitudinal axis L. The grooves 30 will be discussed further below.

The shifter assembly 20 further includes a handle 32 coupled to the lever 22. Generally, the user utilizes the handle 32 to move the lever 22 to the desired position in the gate 28. The handle 32 has a grip portion 34 and a collar portion 36 extending from the grip portion 34 to a distal end 38. More specifically, the top end 24 of the lever 22 is coupled to the collar portion 36 of the handle 32.

The collar portion 36 defines a cavity 40 along the longitudinal axis L for receiving the lever 22 to couple the handle 32 to the lever 22. Specifically, the cavity 40 extends from the distal end 38 toward the grip portion 34 along the longitudinal axis L. It is to be appreciated that, in certain embodiments, the grip portion 34 can also define the cavity 40. In other words, the cavity 40 can extend into the grip portion 34. It is to be appreciated that the handle 32 can be any suitable configuration, and for example, a cover (not shown) can be disposed on the handle 32.

One of the grip portion 34 and the collar portion 36 include a ridge 42 cooperating with the groove 30 of the lever 22. In certain embodiments, the collar portion 36 includes the ridge 42 with the ridge 42 disposed in the cavity 40. In other embodiments, the grip portion 34 defines the ridge 42 with the ridge 42 disposed in the cavity 40. The ridge 42 is disposed in the groove 30 for preventing the handle 32 from rotating about the longitudinal axis L relative to the lever 22. In other words, the ridge 42 and the groove 30 cooperate to prevent play or lash between the handle 32 and the lever 22 in a rotational direction about the longitudinal axis L. For example, the rotational direction can be clockwise or counter-clockwise about the longitudinal axis L. In addition, the ridge 42 and the groove 30 cooperate to prevent play or lash between the handle 32 and the lever 22 in a transverse direction relative to the longitudinal axis L. In various embodiments, the ridge 42 is further defined as a plurality of ridges 42 spaced from each other with the ridges 42 disposed in respective grooves 30 for preventing the handle 32 from rotating about the longitudinal axis L relative to the lever 22 and/or for preventing the handle 32 from moving transverse to the longitudinal axis L relative to the lever 22. In other words, the ridges 42 and grooves 30 cooperate to prevent play or lash between the handle 32 and the lever 22 in the rotational direction. It is to be appreciated that the ridges 42 and/or the grooves 30 can define a wedge configuration or any other suitable configuration. For example, sensitivities to manufacturing tolerances can be reduced when the ridges 42 and/or the grooves 30 define the wedge configuration.

Referring to Figures 1, 2, and 4, the shifter assembly 20 also includes a sleeve 44 disposed about the lever 22. In addition, the sleeve 44 is disposed about the collar portion 36 of the handle 32. Specifically, the sleeve 44 is coupled to the collar portion 36 to receive the distal end 38 of the collar portion 36. The sleeve 44 includes a first end 46 facing the grip portion 34 and a second end 48 spaced from the first end 46 along the longitudinal axis L. Generally, the first and second ends 46, 48 oppose each other along the longitudinal axis L.

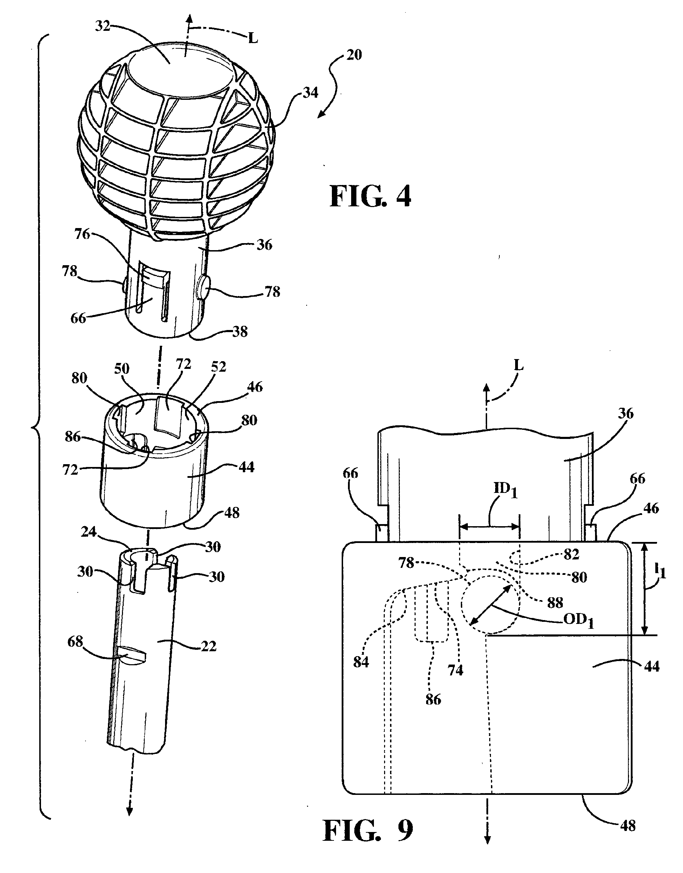

Turning to Figures 4-7, the sleeve 44 defines an aperture 50 along the longitudinal axis L to present an inner surface 52. Specifically, the aperture 50 is disposed through the first and second ends 46, 48 of the sleeve 44 with the inner surface 52 disposed between the first and second ends 46, 48. Generally, the lever 22 and the collar portion 36 of the handle 32 are disposed in the aperture 50.

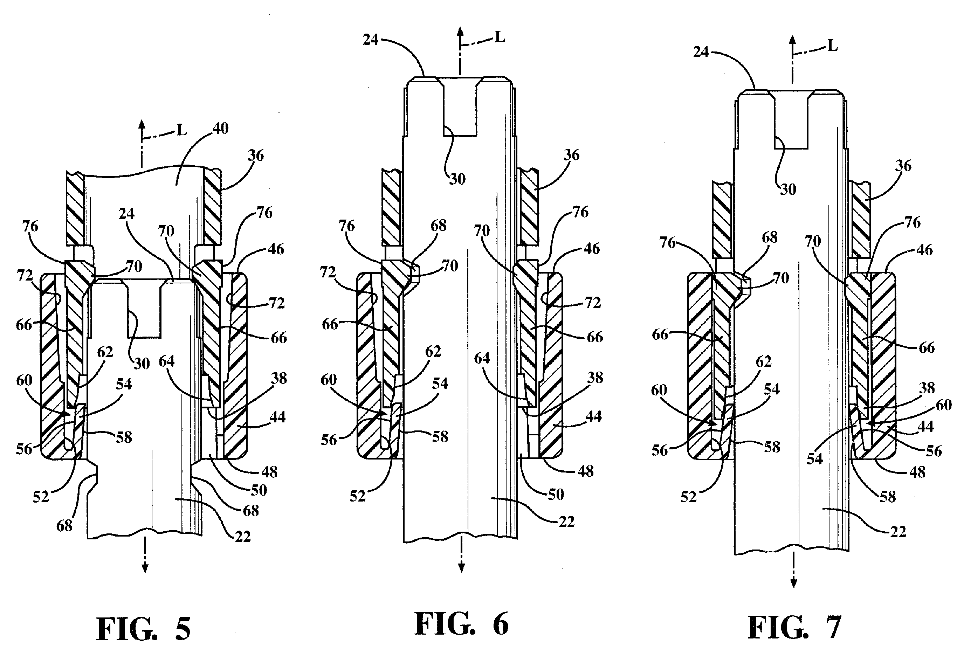

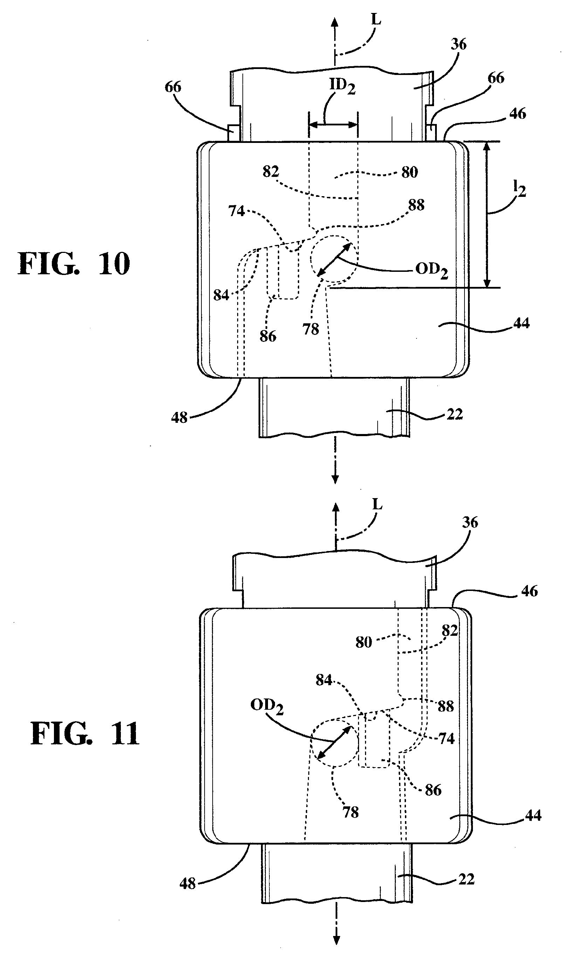

The sleeve 44 is rotatable about the longitudinal axis L between a locked position and an unlocked position. Hence, the sleeve 44 is rotatable about the longitudinal axis L relative to the lever 22 and the handle 32 between the locked and unlocked positions. Generally, the sleeve 44 rotates clockwise and counter-clockwise about the longitudinal axis L. In one embodiment, as shown in Figures 10 and 11, the sleeve 44 rotates counter-clockwise when moving the sleeve 44 to the locked position and the sleeve 44 rotates clockwise when moving the sleeve 44 to the unlocked position. It is to be appreciated that various components can be modified such that the sleeve 44 can rotate clockwise when moving the sleeve 44 to the locked position and counter-clockwise when moving the sleeve 44 to the unlocked position. Specifically, the sleeve 44 can rotate about the longitudinal axis L any suitable degree from the unlocked position to the locked position or vice versa. For example, the sleeve 44 can be rotated about the longitudinal axis L from about 15 to about 50, about 30 to about 45, or about 30 to about 35, degrees from the unlocked position to the locked position and vice versa. In certain embodiments, the sleeve 44 can be rotated about the longitudinal axis L about 45 degrees from the unlocked position to the locked position and vice versa. It is to be appreciated that the sleeve 44 can be rotated about the longitudinal axis L any suitable degree. The locked position is shown in Figures 1, 2, 7, 11, and 12 and the unlocked position is shown in the Figures 5, 6, 9, and 10.

Furthermore, the sleeve 44 is moveable along the longitudinal axis L during rotation of the sleeve 44 between the locked and unlocked positions. Specifically, the sleeve 44 is moveable upwardly and downwardly relative to the longitudinal axis L depending on whether the sleeve 44 is rotating clockwise or counter-clockwise as discussed above. For example, when the sleeve 44 rotates to the locked position, the sleeve 44 moves upwardly toward the handle 32 along the longitudinal axis L and when the sleeve 44 rotates to the unlocked position, the sleeve 44 moves downwardly away from the handle 32 along the longitudinal axis L.

The shifter assembly 20 further includes a flange 54 coupled to the second end 48 of the sleeve 44. More specifically, the flange 54 extends into the aperture 50 of the sleeve 44 and toward the first end 46 of the sleeve 44. In the words, the flange 54 is inclined in the aperture 50. The flange 54 concurrently moves with the sleeve 44 along the longitudinal axis L during rotation of the sleeve 44 between the locked and unlocked positions. Therefore, for example, when the sleeve 44 rotates to the locked position, the flange 54 moves upwardly toward the handle 32 along the longitudinal axis L.

The flange 54 cooperates with the distal end 38 of the collar portion 36 such that the flange 54 is wedged between the lever 22 and the distal end 38 of the collar portion 36 when the sleeve 44 is in the locked position for preventing lash between the handle 32 and the lever 22. Therefore, for example, when the sleeve 44 rotates to the locked position, the flange 54 moves upwardly and engages the distal end 38 of the collar portion 36 such that the flange 54 is wedged between the lever 22 and the distal end 38. In certain embodiments, the collar portion 36 is wedged between the inner surface 52 of the sleeve 44, the flange 54, and the lever 22 when the sleeve 44 is in the locked position. Generally, the flange 54 and the distal end 38 cooperate to prevent play or lash between the handle 32 and the lever 22 in the transverse direction relative to the longitudinal axis L. It is to be appreciated that the flange 54 and the distal end 38 cooperate to also prevent play or lash between the handle 32 and the lever 22 in an axial direction along the longitudinal axis L. As discussed above, the ridges 42 and the grooves 30 cooperate to prevent play or lash in the transverse direction and additionally, the flange 54 and the distal end 38 cooperate to prevent play or lash in the transverse direction. Therefore, multiple components cooperate to prevent play or lash in the transverse direction.

The flange 54 has a first side 56 facing the inner surface 52 and a second side 58 facing the lever 22. Generally, the first and second sides 56, 58 oppose each other. The inner surface 52 of the sleeve 44 and the first side 56 of the flange 54 are spaced from each other to define a gap 60. As such, the distal end 38 of the collar portion 36 is disposed in the gap 60 and engages the first side 56 of the flange 54. In certain embodiments, the distal end 38 of the collar portion 36 is disposed in the gap 60 to wedge the distal end 38 between the sleeve 44 and the flange 54 when the sleeve 44 is in the locked position. For example, the distal end 38 of the collar portion 36 can be wedged between the inner surface 52 of the sleeve 44 and the first side 56 of the flange 54 when the sleeve 44 is in the locked position. Therefore, the distal end 38 of the collar portion 36 and the flange 54 are wedged between the sleeve 44 and the lever 22 when the sleeve 44 is in the locked position.

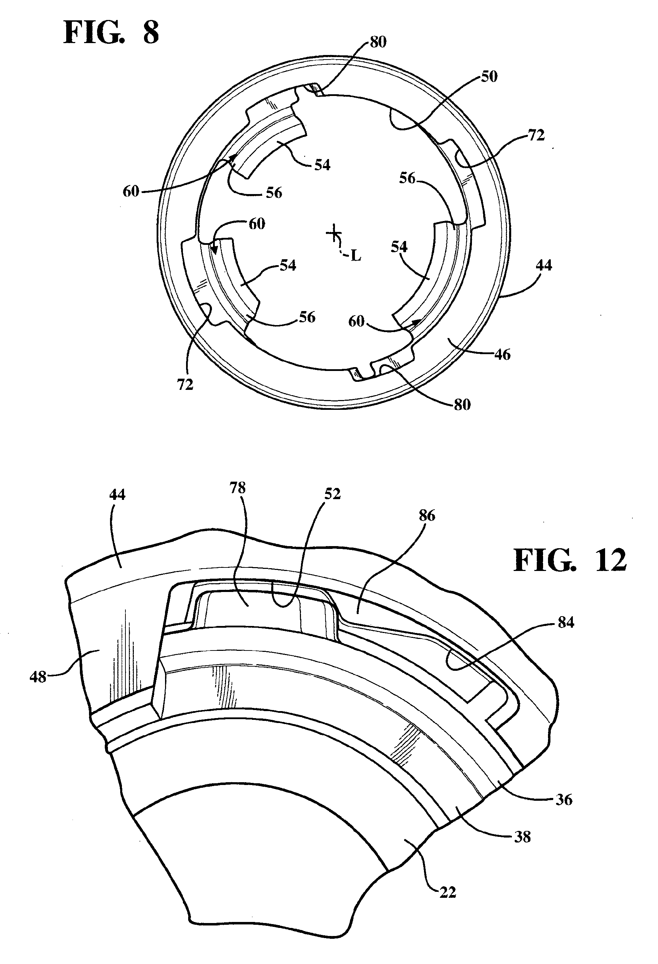

In various embodiments, the flange 54 is further defined as a plurality of flanges 54 spaced from each other as best shown in Figure 8. The flanges 54 extend into the aperture 50 of the sleeve 44 and have the first and second sides 56, 58. As such, each of the first side 56 of the flanges 54 are spaced from the inner surface 52 of the sleeve 44 to define respective gaps 60. Therefore, the distal end 38 of the collar portion 36 is disposed in the gaps 60 and engages the first side 56 of the flanges 54. Each of the flanges 54 cooperate with the distal end 38 such that the flanges 54 are wedged between the lever 22 and the distal end 38 when the sleeve 44 is in the locked position. In certain embodiments, the distal end 38 of the collar portion 36 is disposed in the gaps 60 to wedge the distal end 38 between the sleeve 44 and the flanges 54 when the sleeve 44 is in the locked position. In various embodiments, the flanges 54 are integrally formed with the sleeve 44. In other embodiments, the flanges 54 are attached to the sleeve 44 by any suitable method.

The flanges 54 are radially spaced from each other relative to the longitudinal axis L at any suitable distance. For example, the flanges 54 can be uniformly spaced from each other or not uniformly spaced from each other. As shown in Figure 8, the flanges 54 are not uniformly spaced from each other to assist with production purposes, such as when injection molding the sleeve 44.

Referring back to Figures 5-7, the distal end 38 of the collar portion 36 defines a recess 62 facing the lever 22 for receiving the flange 54 to wedge the flange 54 between the lever 22 and the distal end 38. In certain embodiments, the distal end 38 of the collar portion 36 includes a taper 64 cooperating with the recess 62 for guiding the flange 54 into the recess 62 and/or for wedging the flange 54 between the distal end 38 and the lever 22 as the material increase in thickness. More specifically, when the sleeve 44 rotates from the unlocked position to the locked position which moves the sleeve 44 along the longitudinal axis L, each of the flanges 54 cooperate with the distal end 38 such that each of the flanges 54 engage the taper 64 and are guided into the recess 62. Furthermore, when the sleeve 44 rotates from the unlocked position to the locked position which moves the sleeve 44 along the longitudinal axis L, the flange 54 moves along the taper 64 and toward the lever 22 as the material increases in thickness for wedging the flange 54 between the distal end 38 and the lever 22.

The collar portion 36 further includes a tab 66 cooperating with the lever 22. In certain embodiments, the tab 66 engages the lever 22 when the sleeve 44 and the handle 32 are concurrently disposed on the lever 22 for attaching the sleeve 44 and the handle 32 to the lever 22. Generally, the tab 66 is disposed between the lever 22 and the sleeve 44 when the sleeve 44 is in the locked position for preventing movement of the handle 32 along the longitudinal axis L. Further, the lever 22 defines a notch 68 with the tab 66 engaging the notch 68 for securing the handle 32 to the lever 22. Generally, when the tab 66 of the collar portion 36 engages the notch 68 of the lever 22, play or lash is prevented between the handle 32 and the lever 22 in the axial direction. More specifically, when the sleeve 44 is in the locked position, the tab 66 is disposed between the lever 22 and the sleeve 44 to secure the tab 66 in the notch 68 for preventing play or lash between the handle 32 and the lever 22 in the axial direction. In other words, the handle 32 is prevented from moving up and down relative to the lever 22 when the tab 66 engages the notch 68 and the sleeve 44 is in the locked position. Furthermore, the tab 66 is configured to bias back and forth. For example, the tab 66 biases back for allowing the lever 22 to be inserted through the cavity 40 of the collar portion 36 and the tab 66 biases forward when the tab 66 aligns with the notch 68. It is to be appreciated that in certain embodiments, the tab 66 can be wedged between the lever 22 and the sleeve 44 when the sleeve 44 is in the locked position.

In certain embodiments, the tab 66 is further defined as a plurality of tabs 66 and the notch 68 is further defined as a plurality of notches 68 with the tabs 66 of the collar portion 36 engaging respective notches 68 of the lever 22. Generally, the tabs 66 are spaced from each other and the notches 68 are spaced from each other. Each of the tabs 66 include a tooth 70 selectively engaging respective notches 68. Therefore, the tooth 70 of each of the tabs 66 face the lever 22. Hence, when the teeth 70 engages the lever 22, the tabs 66 bias back and when the teeth 70 align with respective notches 68, the tabs 66 bias forward such that the teeth 70 engage respective notches 68 for securing the handle 32 to the lever 22.

The inner surface 52 of the sleeve 44 defines a depression 72 adjacent the aperture 50 for receiving the tab 66. Generally, the depression 72 and the aperture 50 cooperate with each other. The depression 72 is configured to allow the tab 66 to bias within the depression 72 when the lever 22 is being inserted through the cavity 40 of the collar portion 36. In certain embodiments, the depression 72 is further defined as a plurality of depressions 72 spaced from each other with one of the depressions 72 receiving one of the tabs 66 and another one of the depressions 72 receiving another one of the tabs 66.

Generally, the tab 66 engages and biases over an edge of the depression 72 as the sleeve 44 is rotated to the locked position with the tab 66 abutting the inner surface 52 of the sleeve 44 when the sleeve 44 is in the locked position for preventing movement of the handle 32 along the longitudinal axis L. Optionally, the inner surface 52 of the sleeve 44 includes a first ramp such that the tab 66 engages the first ramp and the notch 68 when the sleeve 44 is in the locked position to dispose the tab 66 between the lever 22 and the sleeve 44 and secure the tab 66 in the notch 68. More specifically, the first ramp is adjacent the depression 72 such that during rotation of the sleeve 44 from the unlocked position to the locked position, the tab 66 biases out of the depression 72 and the first ramp move along the tab 66. In certain embodiments, the first ramp is further defined as a plurality of first ramps with the tabs 66 engaging respective first ramps and respective notches 68 when the sleeve 44 is in the locked position to dispose the tabs 66 between the lever 22 and the sleeve 44. Furthermore, one of the first ramps is disposed adjacent one of the depressions 72 and another one of the first ramps is disposed adjacent another one of the depressions 72.

In addition, each of the tabs 66 include an abutment 76 opposing respective teeth 70 with the abutments 76 engaging respective first ramps. In other words, the abutments 76 face the inner surface 52 of the sleeve 44 and the teeth 70 face the lever 22. As such, when the sleeve 44 is rotated from the unlocked position to the locked position, the tabs 66 are biased out of respective depressions 72 and the first ramps move along respective abutments 76 of respective tabs 66 to bias the tabs 66 into respective notches 68 to dispose the tabs 66 between the lever 22 and the sleeve 44.Turning to Figure 4, the collar portion 36 also includes a protrusion 78 with the tab 66 spaced from the protrusion 78. In certain embodiments, the protrusion 78 engages the sleeve 44 for attaching the sleeve 44 to the handle 32. Furthermore, the inner surface 52 of the sleeve 44 defines a slot 80 adjacent the aperture 50 for receiving the protrusion 78. Generally, the slot 80 and the aperture 50 cooperate with each other and the slot 80 is spaced from the depression 72. Also turning to Figures 9-12, the slot 80 defines a first portion 82 extending along the longitudinal axis L and a second portion 84 extending transverse to the longitudinal axis L and cooperating with the first portion 82. Therefore, the protrusion 78 is disposed in the first portion 82 when the sleeve 44 is in the unlocked position and the protrusion 78 is disposed in the second portion 84 when the sleeve 44 is moving toward and in the locked position. It is to be appreciated that Figures 9-11 are for illustrative purposes only and various features are shown in phantom lines while other features are being omitted for clarity purposes.

The inner surface 52 of the sleeve 44 includes a ramp 86 which is further defined as a second ramp 86 in the below discussion. The second ramp 86 is disposed in the second portion 84 of the slot 80 such that the protrusion 78 engages the second ramp 86 as the sleeve 44 rotates between the locked and unlocked positions. Generally, the second ramp 86 is spaced from the first ramp. In certain embodiments, the protrusion 78 is further defined as a plurality of protrusions 78, the slot 80 is further defined as a plurality of slots 80 and the second ramp 86 is further defined as a plurality of second ramps 86 with the protrusions 78 engaging respective second ramps 86 in respective slots 80 as the sleeve 44 rotates between the locked and unlocked positions. When the protrusions 78 pass respective second ramps 86, a tactical feedback and/or a sound will occur, which indicates that the sleeve 44 is in the locked position. Furthermore, when the protrusions 78 pass respective second ramps 86, the second ramps 86 act as a retainer for preventing the protrusions 78 from moving back over the second ramps 86 and thus the second ramps 86 and the protrusions 78 cooperate to maintain the sleeve 44 in the locked position. When a force is applied to rotate the sleeve 44 from the locked position to the unlocked position, the protrusions 78 will pass back over respective second ramps 86.

The inner surface 52 of the sleeve 44 includes a projection 88 extending into the slot 80 adjacent the first and second portions 82, 84. More specifically, the projection 88 extends from the first portion 82 adjacent the second portion 84. It is to be appreciated that the projection 88 can be any suitable configuration and location within the slot 80.

The protrusion 78 engages the projection 88 for coupling the sleeve 44 to the handle 32 and/or for positioning the sleeve 44 for rotational movement to the locked position. More specifically, when the protrusion 78 passes the projection 88, a tactical feedback and/or a sound will occur which indicates that the protrusion 78 is coupled to the handle 32 and positioned for rotating the sleeve 44 to the locked position. Hence, the projection 88 indicates the proper axial position of the handle 32 relative to the sleeve 44 and that the sleeve 44 is secured to the handle 32 in the unlocked position. Furthermore, the protrusion 78 engages the projection 88 for retaining the protrusion 78 within the slot 80. In certain embodiments, the projection 88 is further defined as a plurality of projections 88 with one of the protrusions 78 engaging one of the projections 88 in one of the slots 80 and another one of the protrusions 78 engaging another one of the projections 88 in another one of the slots 80.

The second portion 84 of the slot 80 defines a shoulder 74 extending transverse to the longitudinal axis L with the protrusion 78 engaging the shoulder 74 for moving the sleeve 44 along the longitudinal axis L as the sleeve 44 rotates between the locked and unlocked positions. In certain embodiments, the shoulder 74 is further defined as a plurality of shoulders 74 with one shoulder 74 disposed in the second portion 84 of one of the slots 80 and another shoulder 74 disposed in the second portion 84 of another one of the slots with the protrusions 78 engaging respective shoulders 74 for moving the sleeve 44 along the longitudinal axis L as the sleeve 44 rotates between the locked and unlocked positions. The shoulder 74 of each of the slots 80 is sloped or inclined from adjacent the first portion 82 toward an end of the second portion 84. For example, the shoulder 74 of each of the slots 80 align with each other about a spiral relative to the longitudinal axis L. As such, the protrusions 78 move along respective shoulders 74 of the slots 80 as the sleeve 44 rotates from the unlocked position to the locked position which causes the sleeve 44 to move along the longitudinal axis L. For example, the shoulder 74 of each of the slots 80 are inclined such that engagement with the protrusions 78 causes the sleeve 44 to move upwardly toward the handle 32 when rotating to the locked position.

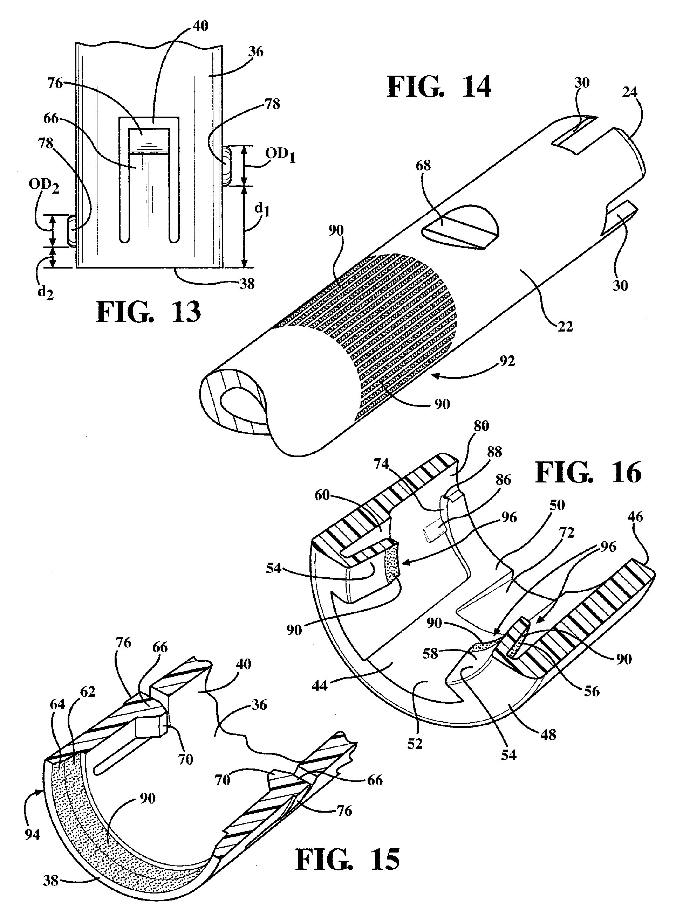

The protrusions 78 are also disposed about the collar portion 36 in a spaced relationship as best shown in Figures 4 and 13. Specifically, the protrusions 78 oppose each other relative to the longitudinal axis L and are offset from each other. For example, one of the protrusions 78 is spaced a first distance d₁ from the distal end 38 and another one of the protrusions 78 is spaced a second distance d₂ from the distal end 38. The first distance d₁ is greater than the second distance d₂. Correspondingly, the first portion 82 of one of the slots 80 define a first length l₁ cooperating with the protrusion 78 of the first distance d₁ (also see Figure 9) and the first portion 82 of another one of the slots 80 defines a second length l₂ cooperating with the protrusion 78 of the second distance d₂ (also see Figures 10 and 11). The first length l₁ is less than the second length l₂ and the first and second lengths l₁, l₂ are each measured from the first end 46 of the sleeve 44. The second portions 84 of respective slots 80 align with each other about the spiral which corresponds to the protrusions 78 being respective first and second distances d₁, d₂. It is to be appreciated that the protrusions 78 can be disposed about the collar portion 36 in any suitable orientation and/or location. Furthermore, it is to be appreciated that the first portion 82 of the slots 80 can correspondingly change to cooperate with changes to the protrusions 78.

Generally, one of the protrusions 78 defines a first outer diameter OD₁ and another one of the protrusions 78 define a second outer diameter OD₂ less than the first outer diameter OD₁. Similarly, the first portion 82 of one of the slots 80 defines a first inner diameter ID₁ and the first portion 82 of another one of the slots 80 defines a second inner diameter ID₂ less than the first inner diameter ID₁. As such, the protrusion 78 of the first outer diameter OD₁ cooperates with the slot 80 of the first inner diameter ID₁ (see Figure 9) and the protrusion 78 of the second outer diameter OD₂ cooperates with the slot 80 of the second inner diameter ID₂ (see Figures 10 and 11) for properly positioning the handle 32 relative to the sleeve 44 during assembly. It is to be appreciated that the protrusions 78 can be any suitable diameter and/or configuration. Furthermore, it is to be appreciated that the first portion 82 of the slots 80 can correspondingly change to cooperate with changes to the protrusions 78.

In certain embodiments, as shown in Figures 14-16, various components of the shifter assembly 20 can present a finished surface 90 for reducing a coefficient of friction. For example, as shown in Figure 14, a portion 92 of the lever 22 can be finished or polished for reducing friction along the handle 32 and/or the flanges 54. More specifically, the portion 92 of the lever 22 can be polished for reducing friction along the collar portion 36 and/or the flanges 54. Further, as shown in Figure 15, a portion 94 of the handle 32 can be finished or polished for reducing friction along the flanges 54. Generally, the cavity 40 of the collar portion 36 and/or the distal end 38 of the collar portion 36 can be polished for reducing friction along the flanges 54. Specifically, the recess 62 and/or the taper 64 of the distal end 38 can be polished for reducing friction along the flanges 54. In addition, as shown in Figure 16, a portion 96 of the flanges 54 can be finished or polished for reducing friction along the lever 22 and/or the collar portion 36. More specifically, the first and/or the second side 56, 58 of the flanges 54 can be polished. When the first side 56 is polished, friction is reduced along the distal end 38 of the collar portion 36 and/or when the second side 58 is polished, friction is reduced along the lever 22.

For illustrative purposes only, the operation of assembling the handle 32, the lever 22, and the sleeve 44 for the shifter assembly 20 will be discussed below. Therefore, the lever 22, the handle 32, and the sleeve 44 are initially spaced from each other in a pre-assembly position for this discussion.

Generally, the sleeve 44 and the handle 32 are attached to each other. It is to be appreciated that the sleeve 44 can move relative to the handle 32 or the handle 32 can move relative to the sleeve 44 to attached these components together. As one example, the distal end 38 of the collar portion 36 is inserted into the aperture 50 of the sleeve 44 from the first end 46 of the sleeve 44. The protrusions 78 align with respective slots 80 of the sleeve 44 such that the protrusions 78 move along respective first portions 82 of the slots 80. As the protrusions 78 move along respective first portions 82 of the slots 80, the protrusions 78 engage respective projections 88. The protrusions 78 move past respective projections 88 to secure the sleeve 44 to the handle 32 in the unlocked position. Simultaneously with the protrusions 78, the tabs 66 are inserted into respective depressions 72 of the sleeve 44. When the sleeve 44 and the collar portion 36 are secured to each other in the unlocked position, the distal end 38 of the collar portion 36 engages the flanges 54. It is to be appreciated that when the sleeve 44 and the collar portion 36 are secured to each other in the unlocked position, the distal end 38 of the collar portion 36 can be spaced from the flanges 54.

The handle 32 and the sleeve 44 are then attached to the lever 22 with the sleeve 44 remaining in the unlocked position. It is to be appreciated that the handle 32 and the sleeve 44 together can move relative to the lever 22 or the lever 22 can move relative to the handle 32 and the sleeve 44. As one example, the tabs 66 of the collar portion 36 align with respective notches 68 of the lever 22. The handle 32 and the sleeve 44 move along the longitudinal axis L such that the top end 24 of the lever 22 moves through the cavity 40 of the collar portion 36. The ridges 42 of the handle 32 engage respective grooves 30 of the top end 24 of the lever 22 for preventing play or lash between the handle 32 and the lever 22 in the rotational direction and/or the transverse direction. As the handle 32 and the sleeve 44 move along the longitudinal axis L, the tabs 66 move or bias past the grooves 30 of the top end 24 of the lever 22, along the lever 22, and into respective depressions 72. When the tabs 66 align with respective notches 68, the tabs 66 bias into respective notches 68 of the lever 22 and the handle 32 is secured to the lever 22 in the proper axial position.

The sleeve 44 is then rotated to the locked position. Specifically, the sleeve 44 is rotated relative to the handle 32 and the lever 22. As the sleeve 44 rotates, the sleeve 44 moves along the longitudinal axis L toward the grip portion 34 of the handle 32. Furthermore, as the sleeve 44 rotates, the protrusions 78 move along respective second portions 84 of the slots 80, the abutment 76 of each of the tabs 66 move over respective edges of the depressions 72, and the flanges 54 move into respective recesses 62. Hence, the distal end 38 of the collar portion 36 is disposed in the gap 60 and the flanges 54 are wedged between the distal end 38 of the collar portion 36 and the lever 22 such that the flanges 54 apply a force to the lever 22 to prevent play or lash between the handle 32 and the lever 22. Simultaneously, the tabs 66 are disposed between the sleeve 44 and the lever 22 such that the tabs 66 bias out of respective depressions 72 and along respective edges of the depressions 72 to abut the inner surface 52 of the sleeve 44 with the teeth 70 of the tabs 66 biased or locked into respective notches 68 of the lever 22. As the sleeve 44 continues to rotate, the protrusions 78 engage respective second ramps 86 in respective slots 80. Once the protrusions 78 pass respective second ramps 86, the sleeve 44 is properly positioned in the locked position. As such, the flange 54 and the distal end 38 cooperate to prevent play or lash between the handle 32 and the lever 22 in the transverse direction, or additionally, prevent play or lash in the axial direction.

It is to be appreciated that the handle 32, the lever 22, and the sleeve 44 can be assembled to each other differently than discussed above. For example, the sleeve 44 can be disposed about the lever 22 and then the handle 32 can be mounted to the lever 22. It is to be appreciated that the handle 32, the lever 22, and the sleeve 44 can be assembled in any suitable order.

Generally, disassembly of the handle 32 from the lever 22 is easy for servicing purposes. The sleeve 44 is rotated from the locked position to the unlocked position. When the sleeve 44 is in the unlocked position, the handle 32, and if desired the sleeve 44, can then move along the longitudinal axis relative to the lever 22 to separate the handle 32, and if desired the sleeve 44, from the lever 22. It is to be appreciated that the handle 32, the lever 22, and the sleeve 44 can be disassembled in any suitable order.

The method of mounting the handle 32 to the lever 22 in the shifter assembly 20 includes the steps of disposing the sleeve 44 about the lever 22, mounting the collar portion 36 of the handle 32 to the lever 22, moving the sleeve 44 to at least partially surround the distal end 38 of the collar portion 36, and rotating the sleeve 44 from the unlocked position to the locked position. It is to be appreciated that disposing the sleeve 44 about the lever 22 can be simultaneously with mounting the collar portion 36 of the handle 32 to the lever 22.

The method further includes the step of wedging the flange 54 of the sleeve 44 between the lever 22 and the distal end 38 of the collar portion 36 when the sleeve 44 is in the locked position to prevent lash between the handle 32 and the lever 22. The method also includes the step of simultaneously wedging the collar portion 36 between the inner surface 52 of the sleeve 44, the flange 54, and the lever 22 when the sleeve 44 is in the locked position. Additionally, the method further includes the step of simultaneously disposing the tab 66 between the sleeve 44 and the lever 22 when the sleeve 44 is in the locked position. In certain embodiments, the method further includes the step of simultaneously wedging the distal end 38 of the collar portion 36 in the gap 60 between the inner surface 52 of the sleeve 44 and the first side 56 of the flange 54 when the sleeve 44 is in the locked position.

Many modifications and variations of the present invention are possible in light of the above teachings. The foregoing invention has been described in accordance with the relevant legal standards; thus, the description is exemplary rather than limiting in nature. Variations and modifications to the disclosed embodiment can become apparent to those skilled in the art and do come within the scope of the invention. Accordingly, the scope of legal protection afforded this invention is defined by the following claims.

## Claims

1. A shifter assembly (20) for a vehicle, said assembly (20) comprising:
a lever (22) defining a longitudinal axis (L);
a handle (32) having a grip portion (34) and a collar portion (36) extending from said grip portion (34) to a distal end (38) with said collar portion (36) defining a cavity (40) along said longitudinal axis (L) for receiving said lever (22) to couple said handle (32) to said lever (22);
a sleeve (44) disposed about said lever (22) and coupled to said collar portion (36) to receive said distal end (38) of said collar portion (36) with said sleeve (44) including a first end (46) facing said grip portion (34) and a second end (48) spaced from said first end (46) along said longitudinal axis (L) and said sleeve (44) being rotatable about said longitudinal axis (L) between a locked position and an unlocked position with said sleeve (44) moveable along said longitudinal axis (L) during rotation of said sleeve (44) between said locked and unlocked positions; and
a flange (54) coupled to said second end (48) of said sleeve (44) and cooperating with said distal end (38) of said collar portion (36) such that said flange (54) is wedged between said lever (22) and said distal end (38) of said collar portion (36) when said sleeve (44) is in said locked position for preventing lash between said handle (32) and said lever (22).

2. An assembly (20) as set forth in claim 1, wherein said sleeve (44) defines an aperture (50) along said longitudinal axis (L) to present an inner surface (52) with said collar portion (36) being wedged between said inner surface (52) of said sleeve (44), said flange (54), and said lever (22) when said sleeve (44) is in said locked position.

3. An assembly (20) as set forth in claim 1, wherein said collar portion (36) includes a tab (66) cooperating with said lever (22) with said tab (66) being disposed between said lever (22) and said sleeve (44) when said sleeve (44) is in said locked position for preventing movement of said handle (32) along said longitudinal axis (L).

4. An assembly (20) as set forth in claim 3, wherein said lever (22) defines a notch (68) with said tab (66) engaging said notch (68) for securing said handle (32) to said lever (22).

5. An assembly (20) as set forth in any one of the preceding claims, wherein said distal end (38) defines a recess (62) facing said lever (22) for receiving said flange (54) to wedge said flange (54) between said lever (22) and said distal end (38).

6. An assembly (20) as set forth in any one of the preceding claims, wherein said flange (54) is further defined as a plurality of flanges (54) spaced from each other and each of said flanges (54) cooperating with said distal end (38) such that said flanges (54) are wedged between said lever (22) and said distal end (38) when said sleeve (44) is in said locked position.

7. An assembly (20) as set forth in claim 1, wherein said collar portion (36) includes a protrusion (78) and said sleeve (44) defines an aperture (50) along said longitudinal axis (L) to present an inner surface (52) and said inner surface (52) defines a slot (80) adjacent said aperture (50) for receiving said protrusion (78).

8. An assembly (20) as set forth in claim 7, wherein said slot (80) defines a first portion (82) extending along said longitudinal axis (L) and a second portion (84) extending transverse to said longitudinal axis (L) and cooperating with said first portion (82) such that said protrusion (78) is disposed in said first portion (82) when said sleeve (44) is in said unlocked position and said protrusion (78) is disposed in said second portion (84) when said sleeve (44) is in said locked position.

9. An assembly (20) as set forth in claim 8, wherein said second portion (84) of said slot (80) defines a shoulder (74) extending transverse to said longitudinal axis (L) with said protrusion (78) engaging said shoulder (74) for moving said sleeve (44) along said longitudinal axis (L) as said sleeve (44) rotates between said locked and unlocked positions which concurrently moves said flange (54) along said longitudinal axis (L).

10. An assembly (20) as set forth in claim 8, wherein said inner surface (52) includes a projection (88) extending into said slot (80) adjacent said first and second portions (82, 84) with said protrusion (78) engaging said projection (88) for positioning said sleeve (44) for rotational movement to said locked position.

11. An assembly (20) as set forth in claim 8 or 10, wherein said inner surface (52) includes a ramp (86) disposed in said second portion (84) of said slot (80) such that said protrusion (78) engages said ramp (86) as said sleeve (44) rotates between said locked and unlocked positions.

12. An assembly (20) as set forth in claim 11, wherein said protrusion (78) is further defined as a plurality of protrusions (78), said slot (80) is further defined as a plurality of slots (80) and said ramp (86) is further defined as a plurality of ramps (86) with said protrusions (78) engaging respective ramps (86) in respective slots (80) as said sleeve (44) rotates between said locked and unlocked positions.

13. An assembly (20) as set forth in any one of claims 7-12, wherein said collar portion (36) includes a tab (66) cooperating with said lever (22) and spaced from said protrusion (78) with said tab (66) being disposed between said lever (22) and said sleeve (44) when said sleeve (44) is in said locked position.

14. An assembly (20) as set forth in any one of claims 1 or 2, wherein said collar portion (36) includes a protrusion (78) engaging said sleeve (44) for attaching said sleeve (44) to said handle (32) and wherein said collar portion (36) includes a tab (66) engaging said lever (22) when said sleeve (44) and said handle (32) are concurrently disposed on said lever (22) for attaching said sleeve (44) and said handle (32) to said lever (22).

## Patentansprüche

1. Schaltanordnung (20) für ein Fahrzeug, wobei die Anordnung (20) aufweist:
einen Hebel (22), der eine Längsachse (L) definiert,
einem Griffknauf (32) mit einem Griffbereich (34) und einem Buchsenbereich (36), der von dem Griffbereich (34) bis zu einem distalen Ende (38) verläuft, wobei der Buchsenbereich (36) einen Hohlraum (40) entlang der Längsachse (L) zur Aufnahme des Hebels (22) aufweist, um den Griffknauf (32) mit dem Hebel (22) zu verbinden,
eine Hülse (44), die um den Hebel (22) herum angeordnet und mit dem Buchsenbereich (36) gekoppelt ist, um das distale Ende (38) des Buchenbereichs (36) aufzunehmen, wobei die Hülse (44) ein erstes Ende (46), das dem Griffbereich (34) zugewandt ist, und ein zweites Ende (48) hat, das auf Abstand zu dem ersten Ende (46) entlang der Längsachse (L) liegt, und wobei die Hülse (44) um die Längsachse (L) zwischen einer verriegelten Stellung und einer entriegelten Stellung drehbar ist, wobei die Hülse (44) während der Drehurig der Hülse (44) zwischen der verriegelten und der entriegelten Stellung entlang der Längsachse (L) beweglich ist, und
einen Flansch (54), der mit dem zweiten Ende (48) der Hülse (44) verbunden ist und mit dem distalen Ende (38) des Buchsenbereichs (36) zusammenwirkt, so dass der Flansch zwischen dem Hebel (22) und dem distalen Ende (38) des Buchsenbereichs (36) verkeilt ist, wenn die Hülse (44) in der verriegelten Stellung ist, um Spiel zwischen dem Griffknauf (32) und dem Hebel (22) zu verhindern.

2. Anordnung (20) nach Anspruch 1, wobei die Hülse (44) eine Öffnung (50) entlang der Längsachse (L) definiert, um eine innere Oberfläche (52) zu präsentieren, wobei der Buchsenbereich (36) zwischen der inneren Oberfläche (52) der Hülse (44), dem Flansch (54) und dem Hebel (22) verkeilt ist, wenn die Hülse (44) sich in der verriegelten Stellung befindet.

3. Anordnung (20) nach Anspruch 1, wobei der Buchsenbereich (36) eine Zunge (66) aufweist, die mit dem Hebel (22) zusammenwirkt, wobei die Zunge (66) zwischen dem Hebel (22) und der Hülse (44) liegt, wenn die Hülse (44) sich in der verriegelten Stellung befindet, um eine Bewegung des Griffknaufs (32) entlang der Längsachse (L) zu verhindern.

4. Anordnung (20) nach Anspruch 3, wobei der Hebel (22) eine Kerbe (68) definiert, wobei die Zunge (66) in die Kerbe (68) eingreift, um den Griffknauf (32) an dem Hebel (22) zu sichern.

5. Anordnung (20) nach einem der vorhergehenden Ansprüche, wobei das distale Ende (38) eine dem Hebel (22) zugewandte Aussparung (62) definiert, um den Flansch (54) aufzunehmen, um den Flansch (54) zwischen dem Hebel (22) und dem distalen Ende (38) zu verkeilen.

6. Anordnung (20) nach einem der vorhergehenden Ansprüche, wobei der Flansch (54) als eine Mehrzahl von auf Abstand zueinander liegenden Flanschen (54) definiert ist und jeder der Flansche (54) mit dem distalen Ende (38) zusammenwirkt, so dass die Flansche (54) zwischen dem Hebel (22) und dem distalen Ende (38) verkeilt sind, wenn sich die Hülse (44) in der verriegelten Stellung befindet.

7. Anordnung (20) nach Anspruch 1, wobei der Buchenbereich (36) einen Vorsprung (78) definiert und die Hülse (44) eine Öffnung (50) entlang der Längsachse (L) definiert, um eine Innenfläche (52) zu präsentieren, und wobei die Innenfläche (52) einen Schlitz (80) benachbart der Öffnung (50) definiert, um den Vorsprung (78) aufzunehmen.

8. Anordnung (20) nach Anspruch 7, wobei der Schlitz (80) einen ersten Bereich (82), der sich entlang der Längsachse (L) erstreckt, und einen zweiten Bereich (84) definiert, der quer zur Längsachse (L) verläuft und mit dem ersten Bereich (82) zusammenwirkt, so dass der Vorsprung (78) in dem ersten Bereich (82) liegt, wenn die Hülse (44) sich in der entriegelten Stellung befindet, und dass der Vorsprung (78) im zweiten Bereich (84) liegt, wenn sich die Hülse (44) in der verriegelten Stellung befindet.

9. Anordnung (20) nach Anspruch 8, wobei der zweite Bereich (84) des Schlitzes (80) eine Schulter (74) definiert, die sich quer zur Längsachse (L) erstreckt, wobei der Vorsprung (78) an der Schulter (74) angreift, um die Hülse (44) entlang der Längsachse (L) zu bewegen, wenn sich die Hülse (44) zwischen der verriegelten und der entriegelten Stellung dreht, was gleichzeitig den Flansch (54) entlang der Längsachse (L) bewegt.

10. Anordnung (20) nach Anspruch 8, wobei die innere Oberfläche (52) einen vorstehenden Bereich (88) hat, der in den Schlitz (80) benachbart den ersten und den zweiten Bereichen (82, 84) vorsteht, wobei der Vorsprung (78) an dem vorstehenden Bereich (88) angreift, um die Hülse (44) zur Drehbewegung in die verriegelte Stellung zu positionieren.

11. Anordnung (20) nach Anspruch 8 oder 10, wobei die Innenfläche (52) eine in dem zweiten Bereich (84) des Schlitzes (80) liegende Rampe (86) aufweist, so dass der Vorsprung (78) an der Rampe (86) angreift, wenn sich die Hülse (44) zwischen der verriegelten und der entriegelten Stellung dreht.

12. Anordnung (20) nach Anspruch 11, wobei der Vorsprung (78) weiter als eine Vielzahl von Vorsprüngen (78) definiert ist, wobei der Schlitz (80) weiter als eine Vielzahl von Schlitzen (80) und die Rampe (86) weiter als eine Vielzahl von Rampen (86) definiert ist, wobei die Vorsprünge (78) an jeweiligen Rampen (86) in jeweiligen Schlitzen (80) angreifen, wenn sich die Hülse (44) zwischen der verriegelten und der entriegelten Stellung dreht.

13. Anordnung (20) nach einem der Ansprüche 7 bis 12, wobei der Buchsenbereich (36) eine Zunge (66) aufweist, die mit dem Hebel (22) zusammenwirkt und auf Abstand zu dem vorstehenden Bereich (78) liegt, wobei die Zunge (66) zwischen dem Hebel (22) und der Hülse (44) angeordnet ist, wenn die Hülse (44) sich in der verriegelten Stellung befindet.

14. Anordnung (20) nach einem der Anspruch 1 oder 2, wobei der Buchenbereich (36) einen Vorsprung (78) aufweist, der an der Hülse (44) angreift, um die Hülse (44) an dem Griff (32) zu befestigen, und wobei der Buchsenbereich (36) eine Zunge (66) aufweist, die an dem Hebel (22) angreift, wenn die Hülse (44) und der Griffknauf (32) gleichzeitig an dem Hebel (22) angeordnet sind, um die Hülse (44) und den Griffknauf (32) an dem Hebel (22) zu befestigen.

## Revendications

1. Ensemble levier de vitesse (20) pour un véhicule, ledit ensemble (20) comprenant :
un levier (22) définissant un axe longitudinal (L) ;
un pommeau (32) comportant une partie de préhension (34) et une partie bague (36) s'étendant de ladite partie de préhension (34) vers une extrémité distale (38), ladite partie bague (36) définissant une cavité (40) le long dudit axe longitudinal (L) destinée à recevoir ledit levier (22) dans le but d'accoupler ledit pommeau (32) et ledit levier (22) ;
un manchon (44) disposé autour dudit levier (22) et couplé à ladite partie bague (36) pour recevoir ladite extrémité (38) de ladite partie bague (36), ledit manchon (44) comprenant une première extrémité (46) faisant face à ladite partie de préhension (34) et une seconde extrémité (48) espacée de ladite première extrémité (46) le long dudit axe longitudinal (L), et ledit manchon (44) pouvant tourner autour dudit axe longitudinal (L) entre une position verrouillée et une position déverrouillée, ledit manchon (44) étant mobile le long dudit axe longitudinal (L) pendant la rotation entre lesdites positions verrouillée et déverrouillée ;
une bride (54) couplée à ladite seconde extrémité (48) dudit manchon (44) et coopérant avec ladite extrémité distale (38) de ladite partie bague (36) de sorte que ladite bride (54) est coincée entre ledit levier (22) et ladite extrémité distale (38) de ladite partie bague (36) lorsque ledit manchon (44) se trouve dans ladite position verrouillée afin d'empêcher un jeu entre ledit pommeau (32) et ledit levier (22).

2. Ensemble (20) selon la revendication 1, dans lequel ledit manchon (44) définit une ouverture (50) le long dudit axe longitudinal (L) présentant une surface intérieure (52), ladite partie bague (36) étant coincée entre ladite surface intérieure (52) dudit manchon (44), ladite bride (54) et ledit levier (22) lorsque ledit manchon (44) est dans ladite position verrouillée.

3. Ensemble (20) selon la revendication 1, dans lequel ladite partie bague (36) comprend une patte (66) coopérant avec ledit levier (22), ladite patte (66) étant disposée entre ledit levier (22) et ledit manchon (44) lorsque ledit manchon (44) est dans ladite position verrouillée afin d'empêcher tout déplacement dudit pommeau (32) le long dudit axe longitudinal (L).

4. Ensemble (20) selon la revendication 3, dans lequel ledit levier (22) définit une encoche (68), ladite patte (66) s'emboîtant dans ladite encoche (68) pour fixer ledit pommeau (32) audit levier (22).

5. Ensemble (20) selon l'une quelconque des revendications précédentes, dans lequel ladite extrémité distale (38) définit un évidement (68) qui fait face audit levier (22) dans le but de recevoir ladite bride (54) pour coincer ladite bride (54) entre ledit levier (22) et ladite extrémité distale (38).

6. Ensemble (20) selon l'une quelconque des revendications précédentes, dans lequel ladite bride (54) est en outre définie par plusieurs brides (54) espacées les unes des autres et chacune desdites brides (54) coopérant avec ladite extrémité distale (38) de sorte que lesdites brides (54) sont coincées entre ledit levier (22) et ladite extrémité distale (38) lorsque ledit manchon (44) est dans ladite position verrouillée.

7. Ensemble (20) selon la revendication 1, dans lequel ladite partie bague (36) comprend une saillie (78) et ledit manchon (44) définit une ouverture (50) le long dudit axe longitudinal (L) présentant une surface intérieure (52) et ladite surface intérieure (52) définit une fente (80) adjacente à ladite ouverture (50) pour recevoir ladite saillie (78).

8. Ensemble (20) selon la revendication 7, dans lequel ladite fente (80) définit une première partie (82) s'étendant le long dudit axe longitudinal (L) et une seconde partie (84) s'étendant transversalement audit axe longitudinal (L) et coopérant avec ladite première partie (82) de sorte que ladite saillie (78) est disposée dans ladite première partie (82) lorsque ledit manchon (44) est dans ladite position déverrouillée, et que ladite saillie (78) est disposée dans ladite seconde partie (84) lorsque ledit manchon (44) est dans ladite position verrouillée.

9. Ensemble (20) selon la revendication 8, dans lequel ladite seconde partie (84) de ladite fente (80) définit un épaulement (74) s'étendant transversalement audit axe longitudinal (L), ladite saillie (78) coopérant avec ledit épaulement (74) pour déplacer ledit manchon (44) le long dudit axe longitudinal (L) lorsque ledit manchon (44) tourne entre lesdites positions verrouillée et déverrouillée, ce qui déplace de manière concurrente ladite bride (54) le long dudit axe longitudinal (L).

10. Ensemble (20) selon la revendication 8, dans lequel ladite surface intérieure (52) comprend une saillie (88) s'étendant dans ladite fente (80) adjacente audit première et seconde parties (82, 84), ladite saillie (78) coopérant avec ladite saillie (88) pour positionner ledit manchon (44) pour un déplacement de rotation jusqu'à ladite position verrouillée.

11. Ensemble (20) selon la revendication 8 ou 10, dans lequel ladite surface intérieure (52) comprend un plan incliné (86) disposé dans ladite seconde partie (84) de ladite fente (80) de sorte que ladite saillie (78) vient en contact avec ledit plan incliné (86) lorsque ledit manchon (44) tourne entre lesdites positions verrouillée et déverrouillée.

12. Ensemble (20) selon la revendication 11, dans lequel ladite saillie (78) est en outre définie comme une pluralité de saillies (78), ladite fente (80) est en outre définie comme une pluralité de fentes (80) et ledit plan incliné (86) est en outre défini comme une pluralité de plans inclinés (86), lesdites saillies (78) venant en contact contre les plans inclinés respectifs (86) des fentes respectives (80) lorsque ledit manchon (44) tourne entre lesdites positions verrouillée et déverrouillée.

13. Ensemble (20) selon l'une quelconque des revendications 7 à 12, dans lequel ladite partie bague (36) comprend une patte (66) coopérant avec ledit levier (22) et espacée de ladite saillie (78), ladite patte (66) étant disposée entre ledit levier (22) et ledit manchon (44) lorsque ledit manchon (44) est dans ladite position verrouillée.

14. Ensemble (20) selon l'une quelconque des revendications 1 ou 2, dans lequel ladite partie bague (36) comprend une saillie (78) coopérant avec ledit manchon (44) pour fixer ledit manchon (44) audit pommeau (32), et dans lequel ladite partie bague (36) comprend une patte (66) coopérant avec ledit levier (22) lorsque ledit manchon (44) et ledit pommeau (32) sont disposés de manière concurrente sur ledit levier (22) pour fixer ledit manchon (44) et ledit pommeau (32) audit levier (22).
